(19) Europäisches Patentamt
European Patent Office
Office européen des brevets

(11) **EP 4 410 395 A1**

(12) **EUROPEAN PATENT APPLICATION**

(43) Date of publication:
**07.08.2024  Bulletin 2024/32**

(21) Application number: **23197796.8**

(22) Date of filing: **15.09.2023**

(51) International Patent Classification (IPC):
**B01D 3/10** *(2006.01)*    **B01D 5/00** *(2006.01)*
**B01D 61/36** *(2006.01)*    **B01D 63/08** *(2006.01)*

(52) Cooperative Patent Classification (CPC):
**B01D 3/10; B01D 5/0015; B01D 61/364;
B01D 61/366; B01D 63/082**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.02.2023  KR 20230013590**

(71) Applicant: **Korea Institute of Science and
Technology
Seoul 02792 (KR)**

(72) Inventors:
- **SONG, Kyung Guen**
  **02792 Seoul (KR)**
- **CHA, Ho Young**
  **02792 Seoul (KR)**
- **CHOI, Jin Hyeok**
  **02792 Seoul (KR)**
- **CHO, Jin Soo**
  **02792 Seoul (KR)**

(74) Representative: **Brown, Alexander Edward
Venner Shipley LLP
200 Aldersgate
London EC1A 4HD (GB)**

(54) **MEMBRANE DISTILLATION FLAT SHEET STACKING MODULE THAT CAN BE USED DEPENDING ON THE PURPOSE OF OPERATION**

(57)    The present invention relates to a membrane distillation flat sheet stacking module that can use various configurations in a membrane distillation process Particularly, the present invention relates to a membrane distillation flat sheet stacking module that can increase productivity and energy efficiency by selecting a process through line change without module disassembly depending on an operation purpose.

Fig. 1

EP 4 410 395 A1

## Description

[Technical Field]

The present invention relates to a membrane distillation flat sheet stacking module that can use various configurations in a membrane distillation process. Particularly, the present invention relates to a membrane distillation flat sheet stacking module that can increase productivity and energy efficiency by selecting a process through line change without module disassembly depending on an operation purpose.

[Background Art]

Clean water is an essential resource for human survival. 70% of the earth is covered with water, but with the exception of seawater, the freshwater that people can use is less than 3%. According to the '2021 Climate Service Status: Water' report published by the World Meteorological Organization (WMO), about 1 billion people around the world are having difficulty in finding drinking water, and the population that cannot be used on time has 1.4 billion people is expected to increase above by 2050.

Desalination technology, which can produce seawater with fresh water, is an alternative to solve water shortage problems. Reverse Osmosis (RO) and Distillation which are a conventional common seawater desalination process have a relatively high pressure (45 to 60 bar) or high temperature (70 to 130 °C), which has a disadvantage of very large energy consumption.

Membrane Distillation (MD) is a process of producing freshwater using a vapor pressure difference generated by the temperature difference between the raw water flowing throughout and the rear end of the separator using a hydrophobic porous separator. The membrane distillation is emerging with the desalinization techniques of high saline water and seawater, and has great expectations in the membrane process and water treatment process.

The membrane distillation (MD) passes through the pores of the membrane in the form of pure steam, it has secured high purity treatment water rather than the water quality obtained from the reverse osmosis (RO), and has recently attracted attention as a next-generation seawater desalination process and low water treatment process.

In the membrane distillation, an aqueous solution such as seawater or wastewater need not be heated and as an operation temperature is lowered, energy costs can be reduced as compared with multi-stage flash (MSF) and multi effect distillation (MED) which is a conventional separation process using heat, and moreover, a microfiltration (MF) membrane having a much larger process, so a very high operation pressure is not also required like the Reverse Osmosis (RO), and membrane fouling which becomes a problem in the convention separation membrane process is not relatively serious, and therefore, research cases have been increased in seawater distillation, water purification, and ultra-pure water manufacturing in recent years due to such many disadvantages.

However, in order to scale and commercialize the membrane distillation (MD), a module only for membrane distillation is required, but in Korea, the development of the module only for the membrane distillation is insufficient conventionally.

[Prior Art Document]

[Patent Document]

KR 10-2016-0051414

[Disclosure]

[Technical Problem]

A conventional developed membrane distillation module may operate only one process after assembly. Unlike the conventional module, the membrane distillation module may operate all of four representative components in membrane distillation through change of inflow and outflow lines even by one assembly.

Further, the present invention has been made in an effort to provide a module that may efficiently increase a size of a membrane area even in a narrow space, and increases contact area efficiency with a membrane and delays a membrane fouling phenomenon by reducing a dead zone inside a channel through introduction of a spacer inside the channel as the developed membrane distillation module.

[Technical Solution]

A membrane distillation flat sheet stacking module according to an embodiment of the present invention may include: a plate which becomes an outer base plate of a membrane distillation module, a hot channel in which hot raw water may flow, a cold channel in which cold cooling water may flow, a neutral channel capable of changing a configuration according to a desired process, a condensing foil, a membrane filter, and a spacer located inside the hot channel, the cold channel, and the neutral channel.

The membrane distillation flat sheet stacking module according to an embodiment of the present invention may further include a condensing foil capable of condensing steam in the neutral channel.

The neutral channel may be configured by one selected in each process such as produced water which flows in a direct contact type membrane distillation, an air gap in an air gap type membrane distillation, a vacuum pressure using a vacuum pump in a vacuum type membrane distillation, and oxygen and nitrogen in a sweeping gas type membrane distillation to produce water.

A flow mode of the membrane distillation flat sheet stacking module may be one selected from a co-current mode or a counter-current mode.

The cold channel may include a cold channel distribution groove, a cold channel perforation portion, and a cold channel inflow groove.

The hot channel may include a hot channel distribution groove, a hot channel perforation portion, and a hot channel inflow groove.

The neutral channel may include a neutral channel distribution groove, a neutral channel perforation portion, and a neutral channel inflow groove.

[Advantageous Effects]

According to the present invention, it is possible to provide a membrane distillation flat sheet stacking module that can increase productivity and energy efficiency by selecting a process through line change without module disassembly depending on an operation purpose. Further, the membrane distillation flat sheet stacking module can be changed to a parallel type/serial type according to an internal inflow/outflow location in addition to a module configuration, and a spacer is added inside all channels to increase contact area efficiency with a membrane.

[Description of Drawings]

FIG. 1 is an exploded perspective view of an operation example of a direct contact type membrane distillation module according to an embodiment of the present invention.

FIG. 2 is an exploded perspective view of an operation example of an air gap, vacuum, and sweeping gas type membrane distillation module according to an embodiment of the present invention.

FIG. 3 is a perspective view for a hot channel, neutral channel, a cold channel, a spacer, and a membrane filter.

FIG. 4 illustrates a water flux for each membrane distillation configuration according to a flow rte.

FIG. 5 illustrates a water flux for each membrane distillation configuration according to a temperature.

FIG. 6 illustrates a performance ratio according to a temperature difference and the flow rate in direct contact type membrane distillation.

FIG. 7 illustrates a performance ratio according to a temperature difference and the flow rate in air gap type membrane distillation.

FIG. 8 illustrates a comparison of the water flux and the performance ratio between the direct contact type membrane distillation and the air gap type membrane distillation.

[Mode for Invention]

Hereinafter, preferred exemplary embodiments of the present invention will be described in detail with reference to the accompanying drawings. However, the technical spirit of the present invention is not limited to embodiments described herein and may be embodied in other forms. Rather, the embodiments introduced herein are provided so that the disclosure may be made thorough and complete, and so that the spirit of the invention is fully conveyed to those skilled in the art.

In this specification, it means that if a component is mentioned as being on the other component, it may be formed directly on the other component or a third component may be interposed therebetween. In addition, in the drawings, thicknesses of a membrane and areas are exaggerated for the effective explanation of the technical content.

Further, in various embodiments of this specification, the terms such as first, second, and third, etc. have been used to describe various components, but these components should not be limited by these terms. These terms are only used to distinguish any component from other components. Therefore, in any one embodiment, the first component may be referred to as the second component in another embodiment. Each embodiment described herein also includes a complementary embodiment thereof. In addition, 'and/or' here are used to include at least one of the components listed before and after.

In this specification, a singular form includes a plural form if there is no clearly opposite meaning in the context. Further, it should be understood that term "include" or "have"indicates that a feature, a number, a step, a component, or the combination thereof described in the specification is present, but does not exclude a possibility of presence or addition of one or more other features, numbers, steps, components, or combinations thereof, in advance. In addition, in this specification, "connection" is used to include both indirectly connecting and directly connecting a plurality of components.

Further, hereinbelow, in describing the present invention, detailed description of associated known function or constitutions will be omitted if it is determined that it unnecessarily makes the gist of the present invention unclear.

Membrane distillation flat sheet stacking module

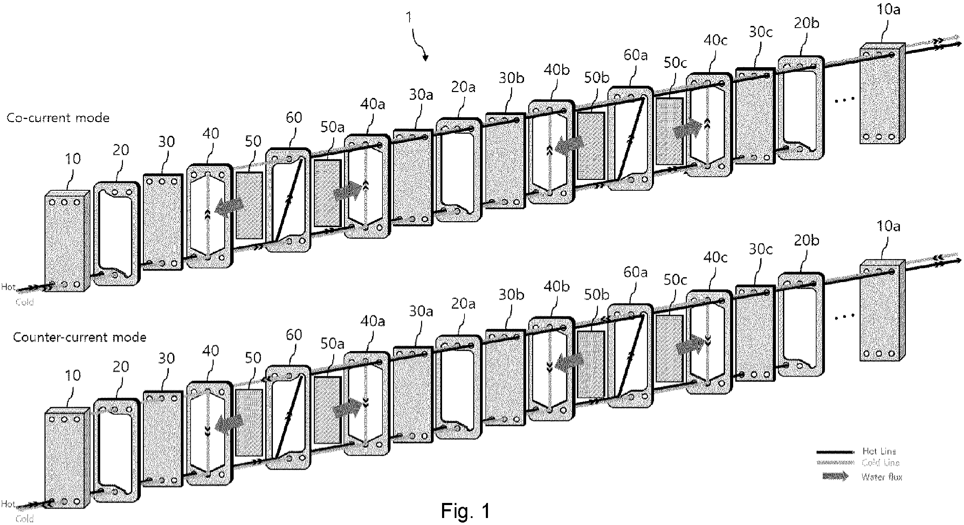

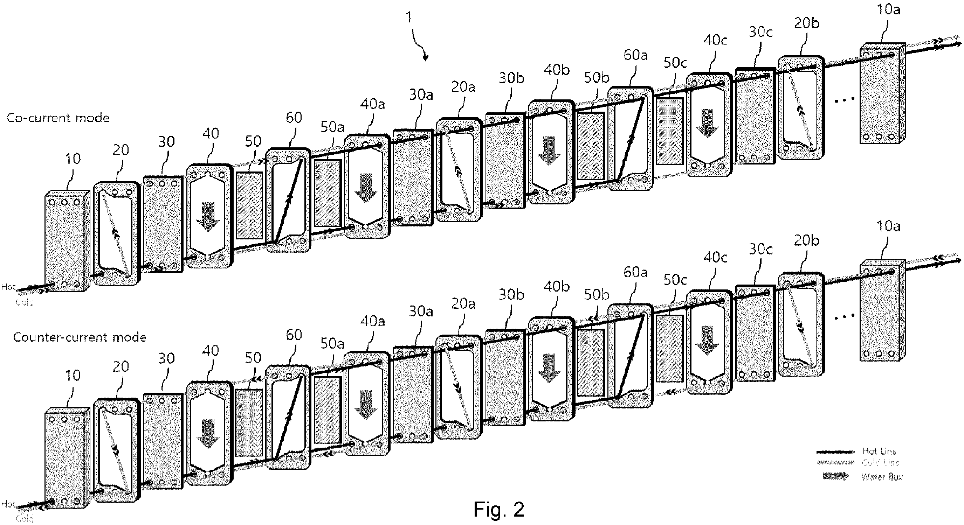

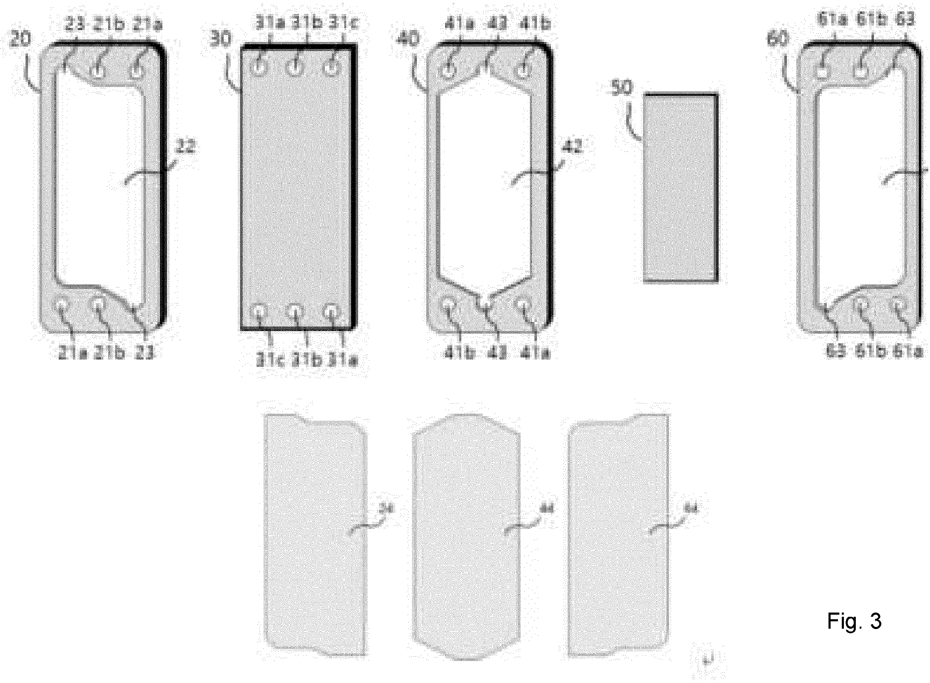

Hereinafter, four representative membrane distillation configurations using a membrane distillation flat sheet stacking module will be described in detail with reference to FIGS. 1 to 3 which are accompanied.

The membrane distillation flat sheet stacking module 1 according to an embodiment of the present invention may include a plate 10 which becomes an outer base plate of a membrane distillation module, a cold channel 20 in which a cold fluid may flow, a condensing foil 30 for condensing stream, a neutral channel 40 capable of changing a configuration according to a desired process, a hot channel 60 in which a hot fluid may flow, spacers 24, 44, and 64 located inside the cold channel 20, the neutral channel 40, and the hot channel 60, and a membrane filter 50.

The plate 10 may include an upper plate or a lower plate. The upper plate and the lower plate may be used as the outer base plate of the membrane distillation flat sheet stacking module.

The plate 10 may include six grooves. Six grooves may be used as a passage in which the fluid flows in and out, or is distributed. The plate 10 may be made of various materials by considering an operation temperature and the amount of money. The plate 10 may be manufactured by using engineering plastics. The engineering plastics may include polyvocabonate (PC), modified polyphenylene oxide (MPPO), Nylon, poly acetal, and polyButylene terephthalate (PBT).

The plate 10 may be manufactured by 1 or 2 or more compounds selected from polyvocabonate (PC), modified polyphenylene oxide (MPPO), Nylon, poly acetal, and polyButylene terephthalate (PBT).

The cold channel 20, the neutral channel 40, and the hot channel 60 may be made of various materials by considering an operation temperature and the amount of money. The cold channel 20, the neutral channel 40, and the hot channel 60 may be manufactured by using engineering plastics. The engineering plastics may include polyvocabonate (PC), modified polyphenylene oxide (MPPO), Nylon, poly acetal, and polyButylene terephthalate (PBT).

The cold channel 20, the neutral channel 40, and the hot channel 60 may be manufactured by 1 or 2 or more compounds selected from polyvocabonate (PC), modified polyphenylene oxide (MPPO), Nylon, poly acetal, and polyButylene terephthalate (PBT).

The cold channel 20 may include a cold channel distribution groove 21, a cold channel perforation portion 22, a cold channel inflow groove 23, and a cold channel spacer 24.

A fluid which flows in through the cold channel inflow groove 23 may flow. Specifically, cold cooling water may flow in the cold channel 20. More specifically, cold cooling water for condensing generated steam may flow in the cold channel 20.

The fluid which flows in through the cold channel inflow groove 23 may flow to the inside of the cold channel 20. Specifically, the fluid which flows in through the cold channel inflow groove 23 may flow through the cold channel spacer 24, and flow to the cold channel inflow groove 23 opposite thereto.

The cold channel distribution groove 21 may be used as a passage in which the fluid flows. Specifically, the fluid which flows in through the cold channel distribution groove 21 may flow to a condensing foil distribution groove 31, a neutral channel distribution groove 41, and a hot channel distribution groove 61.

The cold channel spacer 24 may be located in the channel. Preferably, the cold channel spacer 24 may be located inside the channel. The cold channel spacer 24 has the following advantages through size optimization. First, durability is secured. Second, flux is increased due to an increase of heat/mass transfer. Third, there is an advantage in that it is possible to control the membrane fouling phenomenon through cross flow. Further, the spacer may be used in two layers. A water flux of water may be increased by reducing a dead zone due to two layers of spacers.

The hot channel 60 may include a hot channel distribution groove 61, a hot channel perforation portion 62, a hot channel inflow groove 63, and a hot channel spacer 64.

A fluid which flows in through the hot channel inflow groove 63 may flow. Specifically, hot raw water may flow in the hot channel 60.

The fluid which flows in through the hot channel inflow groove 63 may flow to the inside of the hot channel 60. Specifically, the fluid which flows in through the hot channel inflow groove 63 may flow through the hot channel spacer 64, and flow to the hot channel inflow groove 63 opposite thereto.

The hot channel distribution groove 61 may be used as a passage in which the fluid flows. Specifically, the fluid which flows in through the hot channel distribution groove 61 may flow to the condensing foil distribution groove 31, the neutral channel distribution groove 41, and the cold channel distribution groove 21.

The hot channel spacer 64 may be located in the channel. Preferably, the hot channel spacer 64 may be located inside the channel. The hot channel spacer 64 has the same advantages as the cold spacer 24 described above through the size optimization.

The neutral channel 40 may include a neutral channel distribution groove 41, a neutral channel perforation portion 42, a neutral channel inflow groove 43, and a neutral channel spacer 44.

The fluid and gas may flow in the neutral channel 40.

Specifically, in the direct contact type membrane distillation, production water may flow in the neutral channel 40. In the air gap type membrane distillation, water may flow which is produced by using an air gap. In the vacuum type membrane distillation, water may flow which is produced by using a vacuum pressure using a vacuum pump. In the sweeping gas type membrane distillation, water may flow which is produced by using gas such as oxygen, nitrogen, etc.

The fluid and the gas which flow in through the neutral channel inflow groove 43 may flow to the inside of the neutral channel 40. Specifically, the fluid which flows in through the neutral channel inflow groove 43 may flow through the neutral channel spacer 44, and flow to the neutral channel inflow groove 43 opposite thereto.

The neutral channel distribution groove 41 may be used as a passage in which the fluid flows. Specifically, the fluid which flows in through the neutral channel distribution groove 41 may flow to the condensing foil distribution groove 31, the hot channel distribution groove 61, and the cold channel distribution groove 61.

The neutral channel spacer 44 may be located in the channel. Preferably, the neutral channel spacer 44 may be located inside the channel.

The membrane filter 50 may be located between the channels. Specifically, the membrane filter 50 may be located between the hot channel 60 and the neutral channel 40, between the neutral channel 40 and the cold channel 20, and between the hot channel 60 and the cold channel 20.

The membrane filter 50 may be manufactured by a material selected from Nylon, mixed cellulose ester (MCE), Polyehersulphone (PES), Polyvinylidene (PVDF), Polytetrafluoroethylene (PTFE), and Polyethylene (PE).

The membrane distillation flat sheet stacking module 1 according to an embodiment of the present invention may include a plate 10 which becomes an outer base plate of a membrane distillation module, a hot channel 60 in which a hot fluid may flow, a cold channel 20 in which a cold fluid may flow, a neutral channel 40 capable of changing a configuration according to a desired process, a membrane filter 50, and a condensing foil 30 for condensing stream.

The condensing foil 30 may be located in the module. The condensing foil 30 may serve to condense produced steam. In the direct contact type membrane distillation method (DCMD), condensed steam is directly transferred to water and changed to a liquid. However, in the air gap type membrane distillation (AGMD), the vacuum type membrane distillation (VMD), and the sweeping gas type membrane distillation, the condensing foil 20 capable of condensing the produced steam is required.

The membrane distillation flat sheet stacking module 1 according to an embodiment of the present invention may be a form in which the plate 10 which becomes the outer base plate of the membrane distillation module, the hot channel 60 in which the hot fluid may flow, the membrane filter 50, the neutral channel 40 capable of changing the configuration according to the desired process, the membrane filter 50 between the cold channel and the neutral channel, the condensing foil 30 for condensing the stream, and the cold channel in which the cold fluid may flow are sequentially stacked . However, this is just one embodiment, and is not limited to the stacking order of the components.

The membrane distillation flat sheet stacking module according to an embodiment of the present invention may perform a membrane distillation process of the direct contact type membrane distillation (DCMD), the air gap type membrane distillation (AGMD), the vacuum type membrane distillation (VMD), and the sweeping gas type membrane distillation (SGMD). Further, the membrane distillation flat sheet stacking module is a module which is developable up to Permeate gap MD (PGMD) and Conductive gap MD (CGMD) including a conductive material. According to another embodiment the present invention, the operation may be possible by a vacuum type membrane distillation (VMD) process through installing the vacuum pump.

According to yet another embodiment the present invention, the operation may be possible by the process of the sweeping gas type membrane distillation (SGMD) when a flow of air such as $N_2$ and $O_2$ is formed.

The direct contact type membrane distillation (DCMD) has a simple configuration, so the DCMD is most used. According to an embodiment the present invention, a process may be configured in which cooling water is input into the neutral channel 40 to directly contact the membrane.

In the air gap type membrane distillation (AGMD), the air gap is formed in the neutral channel 40 and the cooling water flows on the cold channel, so the AGMD process may be possible.

In the VMD, a VMD process may be possible through the vacuum pump in the neutral channel 40.

In the SGMD, an SGMD process may be possible through a gas flow in the neutral channel 40.

A flow mode of the membrane distillation flat sheet stacking module according to an embodiment of the present invention may be set according to an inflow location outside the module. The flow mode of the membrane distillation flat sheet stacking module includes a co-current mode and a counter-current mode.

The flow mode of the membrane distillation flat sheet stacking module may be one selected from the co-current mode or the counter-current mode.

It is known that the counter-current mode is more efficient in terms of heat exchange, and the counter-current mode has an advantage in that the temperature difference may be comparatively constantly maintained.

In the case of the co-current mode of the direct contact type membrane distillation module 1 according to an embodiment of the present invention, raw water may flow in through grooves of the plate 10. The raw water which flows in may flow to the hot channel distribution groove 63 through the cold channel distribution groove 21, the condensing foil distribution groove 31, and the neutral channel distribution groove 41 in sequence.

Further, the raw water may flow to the inside of the hot channel through the hot channel inflow groove 63, and flow to the hot channel inflow groove 63 opposite thereto. The raw water which flows out to the opposite hot channel inflow groove 63 may flow to the condensing foil distribution groove 31 and the cold channel distribution groove 21 through the neutral channel distribution groove 41.

Simultaneously, the cooling water may flow in through the grooves of the plate 10. The cooling water which flows in may flow to the hot channel distribution groove 61 through the cold channel distribution groove 21, the condensing foil distribution groove 31, and the neutral channel distribution groove 41 in sequence.

Further, the cooling water may flow to the inside of the neutral channel through the neutral channel inflow groove 43, and flow to the neutral channel inflow groove 43 opposite thereto. The cooling water which flows out to the opposite neutral channel inflow groove 43 may flow to the neutral channel inflow groove 43, the condensing foil distribution groove 31 and the cold channel distribution groove 21 through the hot channel distribution groove 61.

The cooling water and the raw water may flow in the same direction by such a mode, and water may be produced in the neutral channel 40.

However, the above embodiment is just one embodiment for describing the present invention, and the stacking structure of the module of the present invention is not limited thereto.

In the case of the counter-current mode of the direct contact type membrane distillation module 1 according to an embodiment of the present invention, the raw water may flow in through the grooves of the plate 10. The raw water which flows in may flow to hot channel distribution groove 63 through the cold channel distribution groove 21, the condensing foil distribution groove 31, and the neutral channel distribution groove 41 in sequence.

Further, the raw water may flow to the inside of the hot channel through the hot channel inflow groove 63, and flow to the hot channel inflow groove 63 opposite thereto. The raw water which flows out to the opposite hot channel inflow groove 63 may flow to the condensing foil distribution groove 31 and the cold channel distribution groove 21 through the neutral channel distribution groove 41.

Simultaneously, the cooling water may flow in through the grooves of the plate 10. The cooling water which flows in may flow to the hot channel distribution groove 61 through the cold channel distribution groove 21, the condensing foil distribution groove 31, and the neutral channel inflow groove 43 in sequence.

Further, the cooling water may flow to the inside of the neutral channel through the neutral channel inflow groove 43, and flow to the neutral channel inflow groove 43 opposite thereto. The cooling water which flows out to the opposite neutral channel inflow groove 43 may flow to the neutral channel inflow groove 43, the condensing foil distribution groove 31 and the cold channel distribution groove 21 through the hot channel distribution groove 61.

The cooling water and the raw water may flow in opposite directions by such a mode, and water may be produced in the neutral channel 40.

However, the above embodiment is just one embodiment for describing the present invention, and the stacking structure of the module of the present invention is not limited thereto.

In the case of the co-current mode of the air gap type membrane distillation module 1 according to an embodiment of the present invention, the raw water may flow in through the grooves of the plate 10. The raw water which flows in may flow to the hot channel distribution groove 63 through the cold channel distribution groove 21, the condensing foil distribution groove 31, and the neutral channel distribution groove 41 in sequence.

Further, the raw water may flow to the inside of the hot channel through the hot channel inflow groove 63, and flow to the hot channel inflow groove 63 opposite thereto. The raw water which flows out to the opposite hot channel inflow groove 63 may flow to the condensing foil distribution groove 31 and the cold channel distribution groove 21 through the neutral channel distribution groove 41.

Simultaneously, the cooling water may flow in through the grooves of the plate 10. The raw water which flows in may flow to the hot channel distribution groove 61 through the cold channel distribution groove 23, the condensing foil distribution groove 31, and the neutral channel distribution groove 41 in sequence.

Further, the cooling water may flow to the inside of the cold channel through the cold channel inflow groove 23, and flow to the cold channel inflow groove 23 opposite thereto. The cooling water which flows out to the opposite cold channel inflow groove 23 may flow to the neural channel distribution groove 31 and the hot channel distribution groove 61 through the condensing foil distribution groove 31.

The cooling water and the raw water may flow in the same direction by such a mode, and water may be produced in the neutral channel 40.

However, the above embodiment is just one embodiment for describing the present invention, and the stacking structure of the module of the present invention is not limited thereto.

In the case of the counter-current mode of the air gap type membrane distillation module 1 according to an embodiment of the present invention, the raw water may flow in through the grooves of the plate 10. The raw water which flows in may flow to the hot channel distribution groove 63 through the cold channel distribution groove 21, the condensing foil distribution groove 31, and the neutral channel distribution groove 41 in sequence.

Further, the raw water may flow to the inside of the hot channel through the hot channel inflow groove 63, and flow to the hot channel inflow groove 63 opposite thereto. The raw water which flows out to the opposite hot channel inflow groove 63 may flow to the condensing foil distribution groove 31 and the cold channel distribution groove 21 through the neutral channel distribution groove 41.

Simultaneously, the cooling water may flow in through the grooves of the plate 10. The raw water which flows in may flow to the hot channel distribution groove 61 through the cold channel distribution groove 23, the condensing foil distribution groove 31, and the neutral channel distribution groove 41 in sequence.

Further, the cooling water may flow to the inside of the cold channel through the cold channel inflow groove 23, and flow to the cold channel inflow groove 23 opposite thereto. The cooling water which flows out to the opposite cold channel inflow groove 23 may flow to the neural channel distribution groove 31 and the hot channel distribution groove 61 through the condensing foil distribution groove 31.

The cooling water and the raw water may flow in opposite directions by such a mode, and water may be produced in the neutral channel 40.

However, the above embodiment is just one embodiment for describing the present invention, and the stacking structure of the module of the present invention is not limited thereto.

Examples

In order to check the performance of the membrane distillation, an experiment was performed while changing various conditions in a solar membrane pilot plant. It was possible to the membrane distillation module to each of the direct contact type membrane distillation (DCMD) module and the air gap type membrane distillation (AGMD) module through a valve installed on each line.

Produced water moves to a production tank through a heat exchanger. A wafer flux was calculated by measuring a weight of the amount of water generated by each valid membrane area. Further, a quality of the produced water was measured through a conductivity meter.

In order to test a developed membrane distillation module, a heat source required for conducting a process was secured by using solar energy which is one of the renewable energy. A solar collector operated from 6:00 to 20:00, and the solar energy gathered in the meantime was exchanged through the heat exchanger, and stored in a solar boiler tank through a circulation pump. When there is no sufficient solar heat, supply water was heated through a heat pump, and a flow rate and a temperature difference of the heated supply water was maintained constantly by a control system.

The flow rate of the supply water was maintained at 7.57 LPM to 53 LPM, and the temperature difference of the supply water was maintained at 10 to 30 °C.

Experimental Example 1. Water flux for each membrane distillation configuration according to flow rate

In order to measure a water flux value according to the flow rate, a pre-test was conducted under to a condition of maintaining 20 to 22 °C. The wafer flux of each configuration was calculated three times for 2 hours.

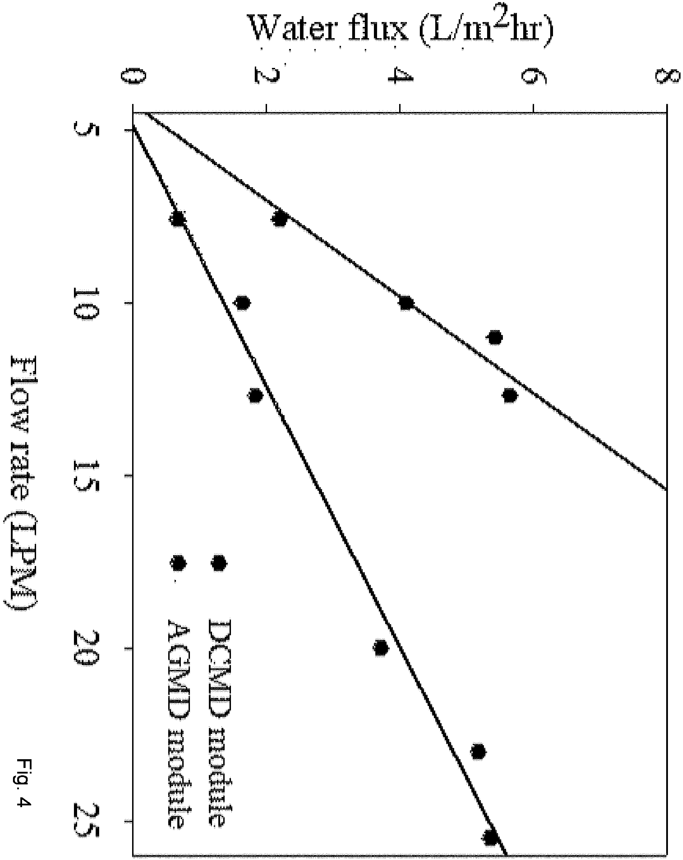

FIG. 4 illustrates a water flux volume for each membrane distillation configuration according to a flow rate with a graph. Referring to FIG. 4, the water flux increased as the flow rate increased. Further, the direct contact type membrane distillation (DGMD) showed a higher water flux than the air gap type membrane distillation (AGMD) by approximately 67%.

Experimental Example 2. Water flux for each membrane distillation configuration according to temperature difference

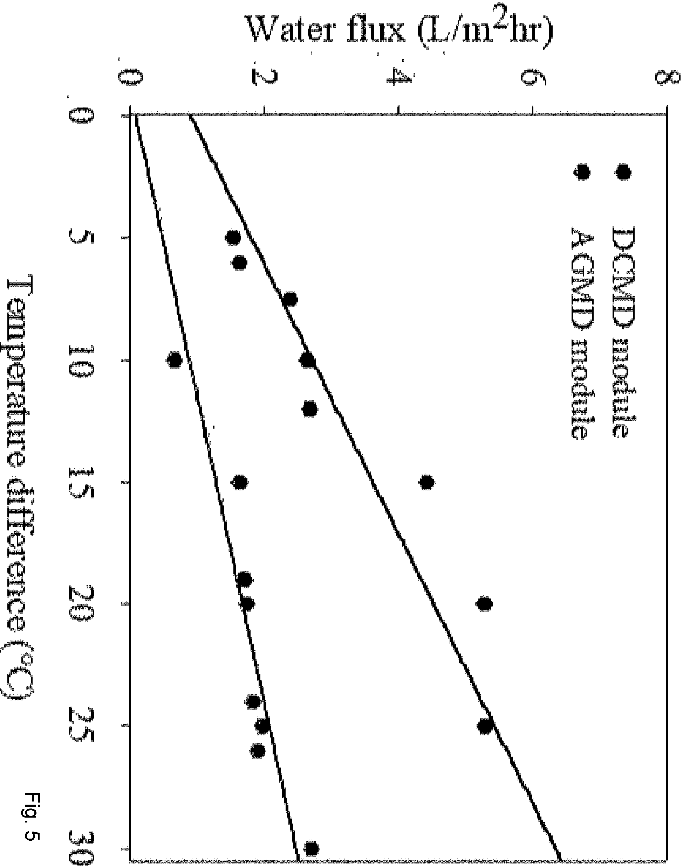

In order to measure the water flux according to the temperature difference, the pre-test was conducted while changing the temperature difference under the condition of the flow rate of 10 LPM. FIG. 5 illustrates a water flux volume for each membrane distillation configuration according to a temperature difference with the graph. Referring to FIG. 5, the direct contact type membrane distillation (DGMD) showed a higher water flux than the air gap type membrane distillation (AGMD) by up to 74% under the condition of the same temperature difference.

Referring to FIGS. 4 and 5, it can be seen that as the flow rate and the value of the temperature difference increase, heat/mass is improved, and as a result, the water flux also increase. Further, it can be seen that the air gap type membrane distillation (AGMD) shows a larger change of the water flux than the direct contact type membrane distillation (DGMD).

Experimental Example 3. Measuring performance ratio by flow rate and temperature difference for each membrane distillation configuration

The performance ratio is defined as a ratio of thermal energy used for evaporation. The performance ratio is a scale for thermal efficiency for a total of input thermal energy. In a membrane distillation (MD) system, the performance ratio was calculated by Calculation equation 1 below 1.

[Equation 1]

$$PR = \frac{\dot{Q}_{flux}}{\dot{Q}_{in}}$$

$Q_{flux}$: Thermal energy (kW) used for water flux
$Q_{in}$: Thermal energy (kW) supplied to module

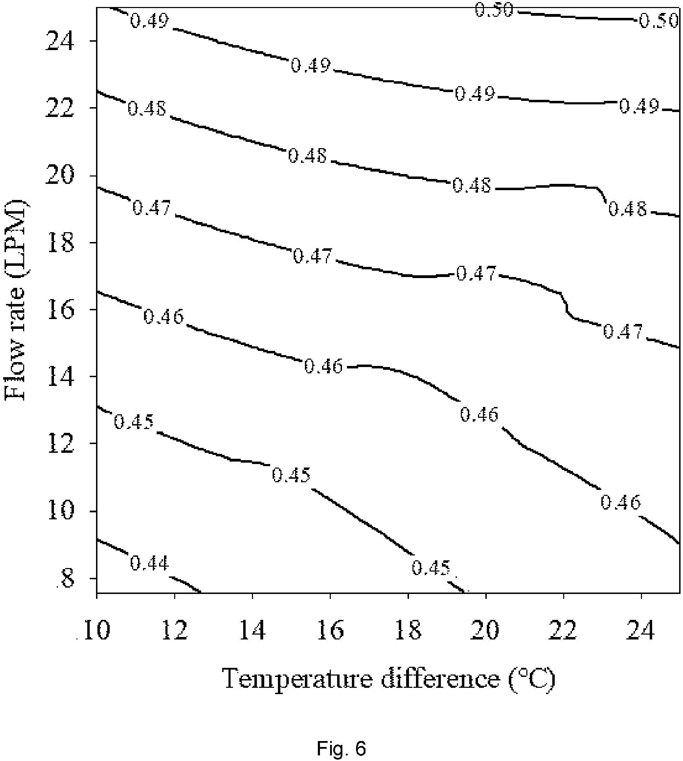

FIG. 6 illustrates a performance ratio according to a temperature difference and the flow rate in direct contact type membrane distillation. Referring to FIG. 6, in the case of the direct contact type membrane distillation, when a higher PR than 0.47 is required, the temperature difference should be lower than 20°C when the flow rate of the water is 17 LPM.

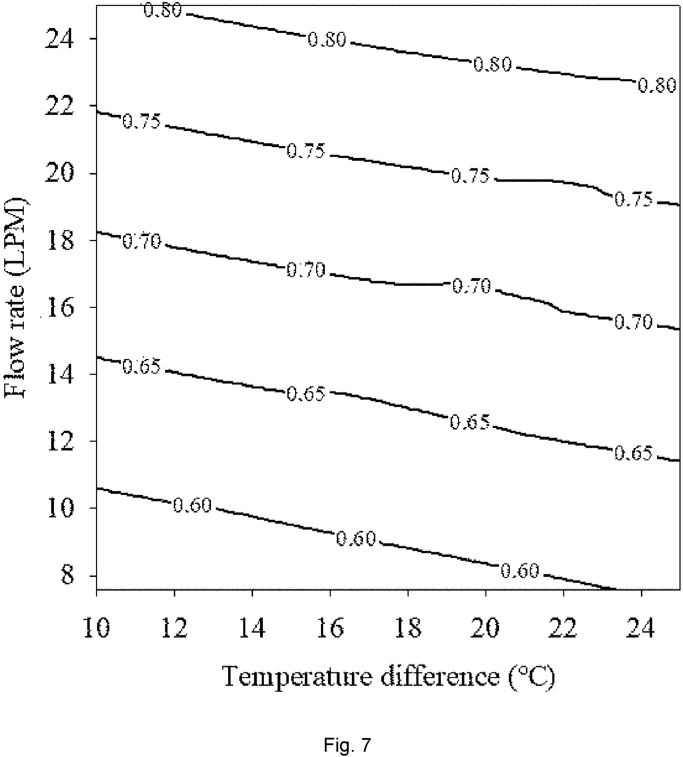

FIG. 7 illustrates a performance ratio according to a temperature difference and the flow rate in air pore type membrane distillation. Referring to FIG. 7, in the case of the air gap type membrane distillation, when a higher PR than 0.75 is required, the temperature difference should be lower than 20°C when the flow rate of the water is 20 LPM.

Referring to FIGS. 6 and 7, in the air gap type membrane distillation, an average PR value was measured to be higher than the direct contact type membrane distillation by 32% under an operation condition set by the plant.

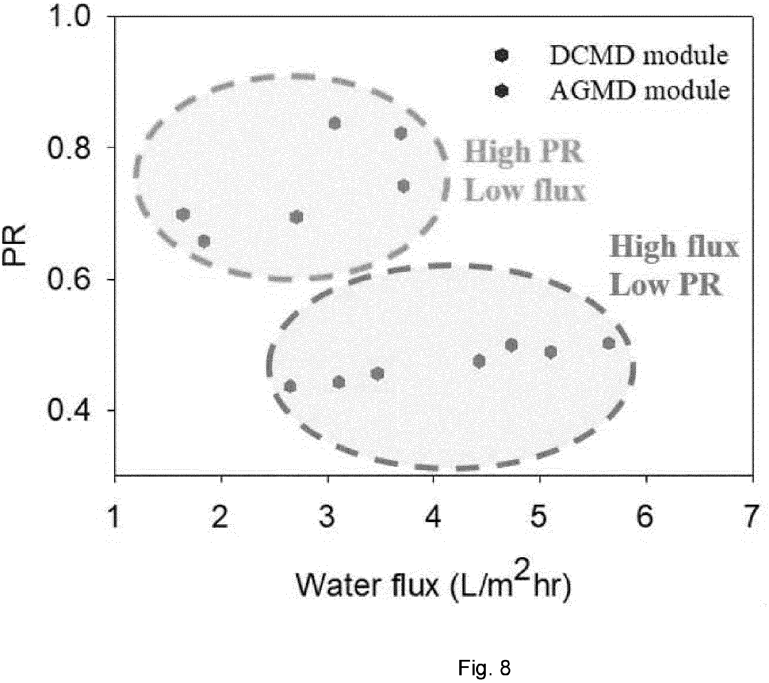

FIG. 8 illustrates a comparison of the production volume and the performance ratio between the direct contact type membrane distillation and the air pore type membrane distillation. Referring to FIG. 8, in the case of the air gap type membrane distillation, it was measured that the PR was low, but the water flux was low, and in the case of the direct contact type membrane distillation, it was measured that the PR was low, but the water flux was high. Through this, it could be seen that in the membrane distillation (MD), various PRs and water fluxes were shown according to a difference for each configuration.

[Explanation of Reference Numerals and Symbols]

1: Membrane distillation flat sheet stacking module
10: Outer base plate
20: Cold (cooling water) channel
21: Cold (cooling water) channel distribution groove
22: Cold (cooling water) channel perforation portion
23: Cold (cooling water) channel inflow groove
24: Cold (cooling water) channel spacer
30: Condensing foil
31: Condensing foil distribution groove
40: Neutral channel
41: Neutral channel distribution groove
42: Neutral channel perforation portion
43: Neutral channel inflow groove
44: Neutral channel spacer
50: Membrane filter
60: Hot (raw water) channel
61: Hot (raw water) channel distribution groove
62: Hot (raw water) channel perforation portion
63: Hot (raw water) channel inflow groove
64: Hot (raw water) channel spacer

**Claims**

1. A membrane distillation flat sheet stacking module comprising:

   a plate which becomes an outer base plate of a membrane distillation module;
   a hot channel in which a fluid may flow;
   a cold channel in which the fluid may flow;
   a neutral channel capable of changing a configuration according to a desired process;
   a spacer located inside the hot channel, the cold channel, and the neutral channel; and
   a membrane filter.

2. The membrane distillation flat sheet stacking module of claim 1, further comprising:
   a condensing foil capable of condensing steam in the neutral channel.

3. The membrane distillation flat sheet stacking module of claim 1 or claim 2, wherein the neutral channel is configured by one selected from produced water, an air gap, vacuum, and a gas flow.

4. The membrane distillation flat sheet stacking module of any preceding claim, wherein a flow mode of the membrane distillation flat sheet stacking module is one selected from a co-current mode or a counter-current mode.

5. The membrane distillation flat sheet stacking module of any preceding claim, wherein the cold channel further includes a cold channel distribution groove, a cold channel perforation portion, and a cold channel inflow groove.

6. The membrane distillation flat sheet stacking module of any preceding claim, wherein the hot channel further includes a hot channel distribution groove, a hot channel perforation portion, and a hot channel inflow groove.

7. The membrane distillation flat sheet stacking module of any preceding claim, wherein the neutral channel further includes a neutral channel distribution groove, a neutral channel perforation portion, and a neutral channel inflow groove.

Co-current mode

Counter-current mode

Fig. 1

Hot Line
Cold Line
Water flux

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 23 19 7796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/138299 A1 (NIJSKENS PIETER [BE] ET AL) 22 May 2014 (2014-05-22) <br> * paragraphs [0061] – [0183]; figure 6 * <br> ----- | 1-7 | INV. <br> B01D3/10 <br> B01D5/00 <br> B01D61/36 |
| X | US 2015/336053 A1 (DOW NOEL [AU] ET AL) 26 November 2015 (2015-11-26) <br> * paragraphs [0077] – [0116]; figures 1-9 * <br> ----- | 1-7 | B01D63/08 |

TECHNICAL FIELDS
SEARCHED       (IPC)

B01D

The present search report has been drawn up for all claims

| Place of search | Date of completion of the search | Examiner |
|---|---|---|
| The Hague | 27 February 2024 | Thibault, Valerie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 7796

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2024

| Patent document cited in search report | | Publication date | Patent family member(s) | | Publication date |
|---|---|---|---|---|---|
| US 2014138299 | A1 | 22-05-2014 | EP | 2545983 A1 | 16-01-2013 |
| | | | EP | 2731701 A1 | 21-05-2014 |
| | | | US | 2014138299 A1 | 22-05-2014 |
| | | | WO | 2013007756 A1 | 17-01-2013 |
| US 2015336053 | A1 | 26-11-2015 | AU | 2013350313 A1 | 04-06-2015 |
| | | | CN | 104884150 A | 02-09-2015 |
| | | | EP | 2922616 A1 | 30-09-2015 |
| | | | US | 2015336053 A1 | 26-11-2015 |
| | | | WO | 2014078897 A1 | 30-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160051414

**Non-patent literature cited in the description**

- 2021 Climate Service Status: Water. World Meteorological Organization (WMO)